# EUROPÄISCHE PATENTSCHRIFT

(11) **EP 2 454 701 B1**
(45) Veröffentlichungstag und Bekanntmachung des Hinweises auf die Patenterteilung: **28.08.2019**
(21) Anmeldenummer: 10730484.2
(22) Anmeldetag: 13.07.2010
(51) Int. Cl.: G06F 21/60, G06F 21/64, H04L 29/06, H04L 9/32

(54) **KOMMUNIKATIONSVERFAHREN, COMPUTERPROGRAMMPRODUKT UND KOMMUNIKATIONSSYSTEM**
COMMUNICATION METHOD, COMPUTER PROGRAM PRODUCT AND COMMUNICATION SYSTEM
PROCÉDÉ DE COMMUNICATION, PRODUIT-PROGRAMME INFORMATIQUE ET SYSTÈME DE COMMUNICATION

(30) Priorität: 14.07.2009 DE 102009027676
(43) Veröffentlichungstag der Anmeldung: 23.05.2012
(60) Teilanmeldung: 19184220.2
(73) Patentinhaber: Bundesdruckerei GmbH, 10958 Berlin (DE)
(72) Erfinder: BORTELDT-HERKENDELL, Shirley, 10117 Berlin (DE); TSCHORN, Stefan, 12163 Berlin (DE)
(74) Vertreter: Richardt Patentanwälte PartG mbB
(86) Internationale Anmeldenummer: PCT/EP2010/060064
(87) Internationale Veröffentlichungsnummer: WO 2011/006893

(56) Entgegenhaltungen:
- EP-A1- 1 701 282
- "Chapter 10: Identification and Entity Authentication ED - MENEZES A; OORSCHOT VAN P; VANSTONE S" [Online] 1. Oktober 1996 (1996-10-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424 , XP001525010 ISBN: 978-0-8493-8523-0 Gefunden im Internet: URL:http://www.cacr.math.uwaterloo.ca/hac/ > Section 10.3 Section 10.3.3
- MAXIM RAYA ET AL: "SECURING VEHICULAR COMMUNICATIONS" IEEE WIRELESS COMMUNICATIONS, IEEE SERVICE CENTER, PISCATAWAY, NJ, US, Bd. 13, Nr. 5, 1. Oktober 2006 (2006-10-01), Seiten 8-15, XP011143978 ISSN: 1536-1284
- KRISHNA SAMPIGETHAYA ET AL: "CARAVAN: Providing Location Privacy for VANET" INTERNET CITATION 2005, XP002394812 Gefunden im Internet: URL:http://www.ee.washington.edu/research/ nsl/papers/ESCAR-05.pdf [gefunden am 2006-08-21]
- F. DOTZER; F. KOHLMAYER; T. KOSCH; M. STRASSBERGER: "Secure Communication for Intersection Assistance" WIT 2005: 2ND INTERNATIONAL WORKSHOP ON INTELLIGENT TRANSPORTATION, Mai 2005 (2005-05), XP007914427 Gefunden im Internet: URL:http://wwwspies.informatik.tu-muenchen .de/personen/doetzer/publications/Doetzer- 05-SecureCommunicationIntersection.pdf> [gefunden am 2010-08-13]

## Beschreibung

Die Erfindung betrifft ein Kommunikationsverfahren zur Übertragung einer Information von einer ersten Vorrichtung zu einer zweiten Vorrichtung, d.h. für eine sogenannte machine-to-machine Kommunikation, eine Vorrichtung und ein Computersystem.

Vorbekannte Kommunikationsverfahren zur machine-to-machine Kommunikation haben den gemeinsamen Nachteil, dass die Kommunikation zwischen den Maschinen manipuliert werden kann. Ein weiterer Nachteil vorbekannter Verfahren ist, dass neben der eigentlichen Kommunikation auch die beteiligten Maschinen selbst nicht manipulationssicher sind.

Token-basierte Authentifizierungsverfahren sind in den zum Anmeldezeitpunkt unveröffentlichten Patentanmeldungen DE 10 2008 000 067.1-31,
DE 10 2008 040 416.0-31, DE 10 2008 042 262.2-31 und DE 10 2009 026 953.3 derselben Patentanmelderin offenbart.

Die EP 1 701 282 A1 beschreibt ein Computersystem mit Mitteln zur Herstellung von Kommunikationsverbindungen mit mehreren Teilnehmern, Mitteln zur Signierung von Daten, die von einem der Teilnehmer empfangen worden sind, Mitteln zur Verifizierung einer elektronischen Signatur von Daten, die von einem der Teilnehmer empfangen worden sind, Mitteln zur Archivierung von Daten, die von einem der Teilnehmer empfangen worden sind, Mitteln zur Speicherung von Teilnehmerprofilen, wobei durch ein Teilnehmerprofil festgelegt ist, ob von dem betreffenden Teilnehmer empfangene Daten zu signieren, zu verifizieren und/oder zu archivieren sind.

Der Artikel von M. Raya et al.: "Securing Vehicular Communications", IEEE Wireless Communications, IEEE Service Center, Piscataway, NJ, US, Bd. 13, Nr. 5, 1. Oktober 2006, analysiert potenzielle Sicherheitsbedrohungen für eine Fahrzeugkommunikation sowie eine robuste Sicherheitsarchitektur, die mit diesen Bedrohungen umgehen kann.

Der Artikel von F. Dötzer et al.: "Secure Communication for Intersection Assistance", WIT 2005: 2nd International Workshop on Intelligent Transportation, beschreibt ein Vehicle Ad-hoc-Netz (VANETS), welches eine Vielzahl von Fahrzeugkomfort-Diensten, Verkehrsmanagement-Anwendungen und Infotainment-Diensten ermöglicht sowie eine Grundlage für präventive und aktive Sicherheitsfunktionen bietet. Durch eine intelligente Steuerung der Signalgebung an Kreuzungen, die Bereitstellung zusätzlicher Informationen für den Fahrer und die Unterstützung des Fahrers in kritischen Situationen, kann die Zahl von Unfällen an Kreuzungen reduziert werden. Es erfolgt ein lokaler Informationsaustausch. Für Dienste, die von Einheiten an Straßen oder von anderen Fahrzeugen angeboten werden, wird ein sicherer Authentifizierungsmechanismus vorgeschlagen, um Manipulationen und unautorisierte Nutzungen zu verhindern. Der Erfindung liegt demgegenüber die Aufgabe zugrunde, ein verbessertes Kommunikationsverfahren zu schaffen sowie ein entsprechendes Computerprogrammprodukt, eine Vorrichtung, ein Computersystem und ein Kommunikationssystem.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Nach Ausführungsformen der Erfindung wird ein Kommunikationsverfahren zur Übertragung einer Information von einer ersten Vorrichtung zu einer zweiten Vorrichtung geschaffen, wobei die erste Vorrichtung ein Sicherheitsmodul aufweist, in dem die Information gespeichert ist. Nach einer erfolgreichen gegenseitigen Authentifikation eines Computersystems und der ersten Vorrichtung erfolgt die Übertragung der Information von der ersten Vorrichtung an das Computersystem. Das Computersystem signiert diese Information. Die signierte Information wird dann an die zweite Vorrichtung übertragen.

Nach Ausführungsformen der Erfindung bildet das Sicherheitsmodul einen integralen Bestandteil der ersten Vorrichtung oder ist mit dieser unlösbar verbunden.

Ausführungsformen der Erfindung sind besonders vorteilhaft, da die Information durch eine vertrauenswürdige Instanz, nämlich das Computersystem, erst nach einer erfolgreichen Authentifizierung aus der ersten Vorrichtung ausgelesen werden kann. Hierdurch kann sichergestellt werden, dass die vertrauenswürdige Instanz zum Auslesen der Information befugt ist und diese nicht manipuliert. Da sich auch die erste Vorrichtung gegenüber dem Computersystem authentifizieren muss, ist ferner sichergestellt, dass auch die erste Vorrichtung integer ist. Die zweite Vorrichtung empfängt dann die Information mit der Signatur des Computersystems, sodass die zweite Vorrichtung sicher sein kann, dass die Information nicht manipuliert ist.

Auf diese Art und Weise wird eine hochsichere Kommunikation zwischen der ersten Vorrichtung und der zweiten Vorrichtung unter Zuhilfenahme einer vertrauenswürdigen Instanz ermöglicht. Dies eröffnet Anwendungen auf verschiedenen Gebieten. Beispielsweise kann es sich bei den ersten und zweiten Vorrichtungen um die Komponenten eines Automatisierungssystems einer industriellen Produktionsanlage handeln oder um Komponenten eines Transportsystems. Insbesondere können die erste und/oder die zweite Vorrichtung Teil eines Transportmittels, wie zum Beispiel eines Kraftfahrzeugs, sein. Ausführungsformen der Erfindung ermöglichen insbesondere eine hochsichere car-to-car Kommunikation.

Nach einer Ausführungsform der Erfindung erfolgt die Kommunikation zwischen den ersten und zweiten Vorrichtungen und dem Computersystem drahtlos, wie zum Beispiel über ein Mobilfunknetz oder nach einem RFID- oder Nahfeld-Kommunikationsverfahren. Auch eine Kommunikation über WLAN, Bluetooth oder wireless USB ist möglich.

Nach einer Ausführungsform der Erfindung erfolgen die gegenseitige Authentifizierung und die Signierung der Information mit Hilfe von Zertifikaten einer Public Key Infrastructure (PKI). Hierzu ist zumindest der ersten Vorrichtung und dem Computersystem jeweils ein Zertifikat mit einem dazugehörigen privaten Schlüssel zugeordnet.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Beispielsweise kann das Zertifikat dem Standard X.509 oder einem anderen Standard entsprechen.

Nach einer Ausführungsform der Erfindung hat die erste Vorrichtung ein Sicherheitsmodul, in dem die Information gespeichert ist, wobei die Authentifizierung mit Hilfe des Sicherheitsmoduls erfolgt, und wobei eine Verbindung, über die die Information übertragen wird, mit Ende-zu-Ende-Verschlüsselung zwischen dem Sicherheitsmodul und dem Computersystem aufgebaut wird.

Unter einem "Sicherheitsmodul" wird hier ein Hardware-Sicherheitsmodul (HSM) verstanden sowie auch ein Tamper Proof Module (TPM), welches auch als Tamper Resistant Module (TRM) bezeichnet wird. Das Sicherheitsmodul ist also durch geeignete Software- und Hardwaremaßnahmen gegen Eingriffe und Manipulationen geschützt.

Durch die Ende-zu-Ende-Verschlüsselung wird ferner sichergestellt, dass die Kommunikation zwischen dem Sicherheitsmodul und dem Computersystem nicht manipuliert oder abgehört werden kann. Dies ermöglicht ein besonders hohes Maß an Sicherheit.

Nach einer Ausführungsform der Erfindung erfolgt die Authentifizierung mittels eines Challenge-Response-Verfahrens, wobei mit Hilfe des Challenge-Response-Verfahrens ein symmetrischer Schlüssel erzeugt wird, der für die Ende-zu-Ende Verschlüsselung der Verbindung verwendet wird. Beispielsweise generiert die erste Vorrichtung oder das Computersystem eine Challenge, wie zum Beispiel eine Zufallszahl, die nach der Authentifizierung als symmetrischer Schlüssel verwendet wird.

Nach einer Ausführungsform der Erfindung hat das Computersystem zumindest ein Zertifikat, welches zur Authentifizierung des Computersystems gegenüber dem Sicherheitsmodul der ersten Vorrichtung verwendet wird. Das Zertifikat beinhaltet eine Angabe derjenigen Informationen, für welche das Computersystem eine Leseberechtigung hat. Das Sicherheitsmodul prüft anhand dieses Zertifikats, ob das Computersystem die erforderliche Leseberechtigung für den Lesezugriff auf die gespeicherte Information hat, bevor ein solcher Lesezugriff durch das Computersystem durchgeführt werden kann.

Nach einer Ausführungsform der Erfindung erfolgt die Übertragung der signierten Information von dem Computersystem unmittelbar an die zweite Vorrichtung. Alter nativ oder zusätzlich kann die signierte Information von dem Computersystem an die erste Vorrichtung gesendet werden, welche die signierte Information dann an die zweite Vorrichtung weiterleitet. Dabei kann die erste Vorrichtung die signierte Information um weitere Informationen ergänzen, um die signierte Information mit den ergänzten weiteren Informationen an die zweite Vorrichtung weiterzuleiten. Alternativ oder zusätzlich kann das Computersystem die signierte Information auch an eine weitere Systemkomponente übertragen, von der die signierte Information verarbeitet wird. Die weitere Systemkomponente leitet dann das Ergebnis der Verarbeitung der signierten Information und/oder die signierte Information selbst an die erste Vorrichtung weiter. Bei der weiteren Systemkomponente kann es sich zum Beispiel um ein off-board-Navigationssystem handeln, welches mit Hilfe der signierten Information Navigationsdaten als ergänzende Informationen generiert. Bei der weiteren Systemkomponente kann es sich auch um eine Verkehrsleitkomponente oder dergleichen handeln.

Nach einer Ausführungsform der Erfindung sendet die erste Vorrichtung ein Signal an die zweite Vorrichtung, um der zweiten Vorrichtung zu signalisieren, dass eine Information in der ersten Vorrichtung gespeichert ist, die zur Übertragung an die zweite Vorrichtung vorgesehen ist. Die erste Vorrichtung sendet daraufhin eine Anforderung zum Lesen der Information an das Computersystem. Daraufhin erfolgen die gegenseitige Authentifizierung des Computersystems und der ersten Vorrichtung, das Auslesen der Information und die Übertragung der signierten Information von dem Computersystem an die zweite Vorrichtung.

Nach einer Ausführungsform der Erfindung sendet die erste Vorrichtung die Information direkt an die zweite Vorrichtung. Die zweite Vorrichtung kann daraufhin mit der Verarbeitung der Information beginnen. Im Wesentlichen gleichzeitig mit dem Beginn der Verarbeitung der Information sendet die zweite Vorrichtung eine Anforderung zur Bestätigung der von der ersten Vorrichtung empfangenen Information an das Computersystem. Daraufhin erfolgt wiederum die gegenseitige Authentifizierung des Computersystems und der ersten Vorrichtung, die Übertragung der Information von der ersten Vorrichtung an das Computersystem sowie die Signierung der Information und die Übertragung der Information von dem Computersystem an die zweite Vorrichtung. Die zweite Vorrichtung kann daraufhin die zunächst unmittelbar von der ersten Vorrichtung empfangene Information mit der von dem Computersystem empfangenen signierten Information auf Übereinstimmung prüfen. Wenn diese Informationen übereinstimmen, so wird die Verarbeitung der Information durch die zweite Vorrichtung fortgesetzt, im gegenteiligen Fall wird die Verarbeitung abgebrochen.

Für den Fall, dass die Verarbeitung der Information durch die zweite Vorrichtung bereits abgeschlossen ist, wenn die signierte Information von dem Computersystem empfangen wird, so wird aufgrund eines Ergebnisses der Verarbeitung der Information nur dann eine Aktion durch die zweite Vorrichtung ausgelöst, wenn die von der ersten Vorrichtung empfangene Information und die von dem Computersystem empfangene signierte Information miteinander übereinstimmen; im gegenteiligen Fall wird die Aktion nicht ausgelöst.

Bei der Aktion kann es sich zum Beispiel um die Generierung eines Steuerungs- und/oder Regelungssignals betreffend die Arbeitsweise der zweiten Vorrichtung und/oder ein Ausgabesignal, beispielsweise zur Ausgabe über eine Nutzer-Schnittstelle, handeln. Beispielsweise kann es sich bei der Aktion um die Auslösung einer Abbremsung des Kraftfahrzeugs handeln, wenn die zweite Vorrichtung in einem Kraftfahrzeug eingebaut ist. Eine solche Abbremsung, insbesondere eine Vollbremsung, kann dann erforderlich sein, wenn die erste Vorrichtung durch die Übermittlung der Information an die zweite Vorrichtung das Vorliegen einer Gefahrensituation kommuniziert.

Von besonderem Vorteil ist hierbei, dass durch die vorab erfolgende Übertragung der Information unmittelbar von der ersten Vorrichtung an die zweite Vorrichtung bereits die Verarbeitung der Information beginnen kann, während die Bestätigung der Information durch das Computersystem erfolgt. Hierdurch wird die Echtzeitfähigkeit der Kommunikation verbessert.

Nach einer Ausführungsform der Erfindung handelt es sich bei der ersten und/oder bei der zweiten Vorrichtung um einen Teil eines Transportmittels, wie zum Beispie! eines Kraftfahrzeugs, insbesondere um eine Komponente der Kraftfahrzeugelektronik. Die erste und/oder zweite Vorrichtung können auch Teil eines Verkehrsschildes, einer Ampel, einer Stauwarnanlage, Verkehrszählungsanlage oder eines on-board oder off-board-Navigationssystems sein.

Mit anderen Worten betreffen weitere Ausführungsformen der Erfindung eine Kommunikation zwischen einem Transportmittel und einem Verkehrsleit- oder Telematiksystem zur Verkehrssteuerung oder Komponenten des Telematiksystems. Beispielsweise kann ein Kraftfahrzeug Telematikinformationen von einer auf "rot" geschalteten Ampel empfangen, wobei diese Telematikinformationen mittels des erfindungsgemäßen Verfahrens authentifiziert werden. In einem weiteren Beispiel kann ein Kraftfahrzeug Telematikinformationen von anderen Verkehrsleitkomponenten empfangen, wie beispielsweise variablen Anzeigen mit Geschwindigkeitsbeschränkungen oder mit Stauwarnungen, wobei diese Telematikinformationen mittels des erfindungsgemäßen Verfahrens authentifiziert wurden. Die empfangenen Telematikinformationen können dann Grundlage für eine Erzeugung von Fahrzeugsteuerbefehlen sein, wie beispielsweise zur Geschwindigkeitsreduktion oder zur Bremsung oder zum Einschalten der Warnblinkanlage, zumindest aber zum Ausgeben optischer und/oder akustischer Warnsignale an den Fahrzeugführer oder Nutzer. Die empfangenen Telematikinformationen können im Falle eines Staus oder einer Baustelle auch aktuellste Umleitungsempfehlungen enthalten, die über einen Lautsprecher akustisch oder über eine Displayeinheit optisch ausgegeben werden. Dies ist beispielsweise auch vorteilhaft für einen Fahrzeugführer, der sich auf einer ihm unbekannten Strecke befindet und dabei möglicherweise einen Geschwindigkeitshinweis übersehen hat. In einer Ausführungsform kann vorgesehen sein, dass die jüngsten Verkehrshinweise oder Gebote oder Verbote solange in einem Datenspeicher gespeichert werden, bis eine Aufhebung des Gebots oder Verbots empfangen wird. Auf diese Weise ist eine vertrauenswürdige Verkehrsflusssteuerung bereitgestellt, welche darüberhinaus eine Erhöhung der Sicherheit im Straßenverkehr ermöglicht und einen Fahrkomfort erhöht.

Beispielsweise werden die von dem Computersystem aus der ersten Vorrichtung ausgelesenen Informationen einer Zentrale, wie zum Beispiel der zweiten Vorrichtung, gemeldet. Aus den Informationen berechnet die zweite Vorrichtung eine Route, Ampelphasen oder dergleichen. Zum Schutz der Informationen dient dabei die Kommunikation basierend auf der PKI. Die erforderliche Sicherheit kann durch vernetzte und verschlüsselte Autorisierung erreicht werden. Ferner kann durch eine Kommunikation verschiedener Bauteile der ersten und zweiten Vorrichtungen und/oder des Computersystems untereinander sichergestellt werden, dass es sich um Originalbauteile und nicht um Fälschungen handelt sowie dass nicht nachträglich an den Bauteilen manipuliert wurde.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.

In einem weiteren Aspekt betrifft die Erfindung eine erste Vorrichtung mit Kommunikationsmitteln zur Kommunikation mit einem Computersystem, einem Sicherheitsmodul mit Mitteln zur Authentifizierung gegenüber dem Computersystem, Speichermitteln zur Speicherung einer Information, und Mitteln zum Aufbau einer geschützten Verbindung über die Kommunikationsmittel zu dem ersten Computersystem, über die das erste Computersystem die Information aus den Speichermitteln empfangen kann, unter der Voraussetzung, dass die gegenseitige Authentifizierung erfolgt ist, wobei die Verbindung mittels Ende-zu-Ende-Verschlüsselung geschützt ist

Die erste Vorrichtung kann für einen stationären oder einen mobilen Betrieb ausgebildet sein. Insbesondere kann die Vorrichtung an einer stationären Verkehrsleitkomponente, wie z.B. einem Verkehrsschild, einer Verkehrsampel oder einem anderen Signalgeber eines Verkehrsüberwachungs- oder Verkehrsleitsystems angeordnet sein. Hierbei kann es sich z.B. um eine Verkehrszählungsanlage oder eine Stauwarnanlage handeln.

Die erste Vorrichtung kann auch für einen mobilen Betrieb ausgelegt sein; beispielsweise kann die Vorrichtung für ein Kraftfahrzeug vorgesehen sein. Beispielsweise kann die Vorrichtung eine Schnittstelle zu einem Kraftfahrzeugbussystem der Kraftfahrzeugelektronik aufweisen, um über das Bussystem mit den Komponenten der Kraftfahrzeugelektronik kommunizieren zu können.

Nach einer Ausführungsform der Erfindung hat die erste Vorrichtung Mittel zur Detektion der zweiten Vorrichtung und Mittel zum Senden eines Signals über die Kommunikationsmittel aufgrund der Detektion der zweiten Vorrichtung. Wenn beispielsweise die zweite Vorrichtung in einem Kraftfahrzeug eingebaut ist, so kann die erste Vorrichtung das vorbeifahrende Kraftfahrzeug detektieren, wie z.B. über einen optischen, kapazitiven oder induktiven Näherungssensor. Auch Radar ist als Mittel zur Detektion möglich. Die Mittel zur Detektion können auch so ausgebildet sein, dass die Kommunikationsmittel der erste Vorrichtung detektieren, dass sich die entsprechenden Kommunikationsmittel der zweiten Vorrichtung innerhalb der Reichweite der Kommunikation befinden. Insbesondere kann die Detektion nach einem RFID- oder einem NFC-Verfahren erfolgen, das heißt als eine sogenannte Discovery der zweiten Vorrichtung durch die erste Vorrichtung. Aufgrund der Detektion der Präsenz der zweiten Vorrichtung, wie z.B. eines vorbeifahrenden Kraftfahrzeugs, generiert und sendet die erste Vorrichtung ein Signal über die Kommunikationsmittel, beispielsweise an das Computersystem und/oder die zweite Vorrichtung und/oder eine weitere Systemkomponente.

Das Signal kann die Information beinhalten oder lediglich signalisieren, dass eine Information in der ersten Vorrichtung zur Übertragung bereitsteht. Bei der Information kann es sich z.B. um eine Geschwindigkeitsbegrenzung, die Mitteilung einer Vorfahrtregelung oder einer Warnung vor einer gefährlichen Verkehrssituation, wie z.B. eines entgegenkommenden Geisterfahrers, eines hinter einer Kurve liegenden Stauendes, auf der Fahrbahn liegender Gegenstände oder dergleichen handeln.

Von besonderem Vorteil ist dabei, dass die Information von einer aufgrund der Authentifizierung ausgewiesenen vertrauenswürdigen Quelle, das heißt der ersten Vorrichtung bzw. deren Sicherheitsmodul, stammt und dass diese Information manipulationssicher übertragen wird, da sie durch eine vertrauenswürdige Instanz, das heißt das Computersystem, signiert worden ist. Ausführungsformen der Erfindung ermöglichen daher sicherheitskritische Anwendungen, wie z.B. im Bereich der Fahrerassistenzsysteme, des autonomen Fahrens und anderer Anwendungen zur Verbesserung der Fahrsicherheit, da beispielsweise die vorsätzliche Verbreitung von falschen Informationen für die Zwecke von Sabotage oder terroristischer Akte nicht zur Auslösung entsprechender Aktionen führen kann, da solche Fehlinformationen nicht aus einer vertrauenswürdigen Quelle stammen können. Dies wird insbesondere durch die PKI sichergestellt.

In einem weiteren Aspekt betrifft die Erfindung ein Computersystem mit Mitteln zum Empfang einer Anforderung für eine Information, Mitteln zur Authentifizierung gegenüber einer ersten Vorrichtung, Mitteln zum Lesen der Information aus einem Sicherheitsmodul der ersten Vorrichtung über eine geschützte Verbindung, wobei es sich um eine Verbindung mit Ende-zu-Ende-Verschlüsselung zwischen dem Sicherheitsmodul und dem Computersystem handelt, und wobei Voraussetzung für das Lesen der Information die zuvorige gegenseitige Authentifizierung ist, Mitteln zum Signieren der Information, Mitteln zum Senden der signierten Information.

Nach einer Ausführungsform der Erfindung befindet sich das Computersystem in einem so genannten Trust-Center, insbesondere in einem signaturgesetzkonformen Trust-Center. Wenn sich das Computersystem in einem Trust-Center befindet, ist in besonders hohem Maße dessen Vertrauenswürdigkeit gewährleistet.

In einem weiteren Aspekt betrifft die Erfindung ein Kommunikationssystem, insbesondere für die machine-to-machine communication zwischen den ersten und zweiten Vorrichtungen unter Zurhilfenahme des Computersystems.

Im Weiteren werden Ausführungsformen der Erfindung mit Bezugnahme auf die Zeichnungen näher erläutert. Es zeigen:
- Figur 1: ein Blockdiagramm einer ersten Ausführungsform eines erfindungsgemäßen Kommunikationssystems und dessen Komponenten,
- Figur 2: ein Flussdiagramm einer ersten Ausführungsform eines erfindungsgemäßen Verfahrens,
- Figur 3: ein Blockdiagramm einer zweiten Ausführungsform eines erfindungsgemäßen Kommunikationssystems und dessen Komponenten,
- Figur 4: ein Flussdiagramm einer zweiten Ausführungsform eines erfindungsgemäßen Verfahrens.

Elemente der nachfolgenden Figuren, die einander entsprechen, werden jeweils mit denselben Bezugszeichen gekennzeichnet.

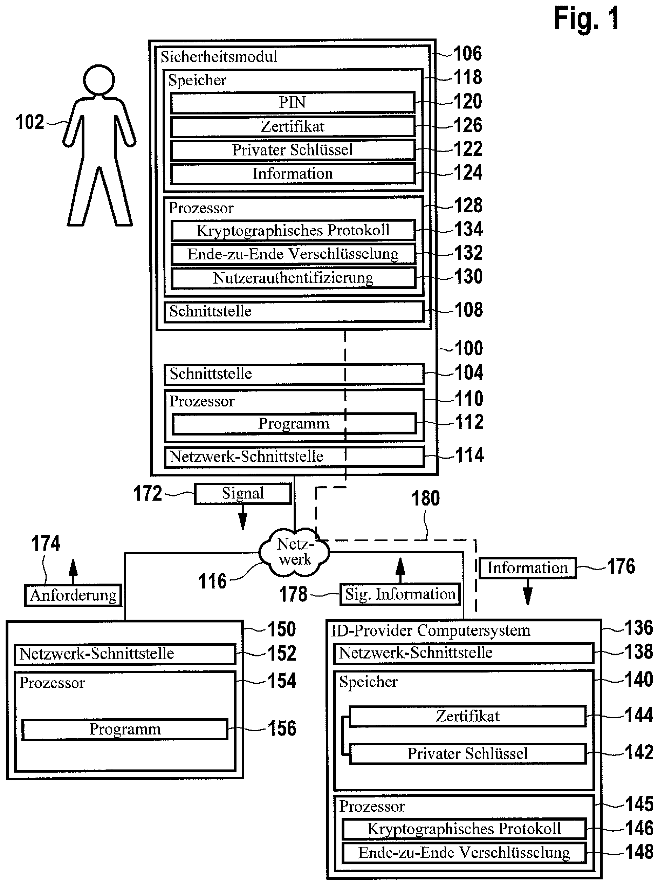

Die Figur 1 zeigt eine erste Vorrichtung 100. Die Vorrichtung 100 kann für einen mobilen oder einen stationären Betrieb ausgebildet sein. Insbesondere kann es sich bei der Vorrichtung 100 um einen stationären Signalgeber handeln. Beispielsweise kann die Vorrichtung 100 an einem Verkehrsschild angeordnet sein und in deren Speicherbereich 124 eine Information speichern, die der auf dem Verkehrsschild angezeigten Information entspricht oder gleicht. Bei dieser Information kann es sich z.B. um eine Geschwindigkeitsbegrenzung, eine Vorfahrtsregelung oder dergleichen handeln.

Die Vorrichtung 100 kann auch an einer Verkehrsampel angeordnet sein. Beispielsweise ist die Vorrichtung 100 mit einer Steuerung der Verkehrsampel verbunden, sodass die in dem Speicherbereich 124 gespeicherte Information die jeweils aktuelle Ampelphase angibt.

Die Vorrichtung 100 kann auch Teil einer Stauwarnanlage sein. In diesem Fall handelt es sich bei der in dem Speicherbereich 124 gespeicherten Information beispielsweise um eine Stauwarnung.

Die Vorrichtung 100 kann auch für einen mobilen Einsatz vorgesehen sein. Beispielsweise kann die Vorrichtung 100 an einem Kraftfahrzeug angebracht sein. Beispielsweise kann die Vorrichtung 100 ein integraler Bestandteil der Kraftfahrzeugelektronik sein; beispielsweise kann es sich bei der Vorrichtung 100 um eine sogenannte Electronic Control Unit (ECU) des Kraftfahrzeugs handeln. Die Vorrichtung 100 kann eine interne Schnittstelle zu einem Bussystem des Kraftfahrzeugs aufweisen, über das die Information zu der Vorrichtung 100 übertragen wird, um die Information in dem Speicherbereich 124 des Sicherheitsmoduls 106 zu speichern. Die in dem Speicherbereich 124 gespeicherte Information kann statisch oder dynamisch sein. Beispielsweise kann es sich bei der Information um eine zeitlich unveränderliche Kennung des Kraftfahrzeugs und/oder einen aktuellen Fahrparameter des Kraftfahrzeugs handeln. Beispielsweise kann es sich bei der Information um die aktuelle Geschwindigkeit und/oder die Beschleunigung und/oder Gier-Rate und/oder eine andere von einem ESP System des Kraftfahrzeugs gelieferte Information, und/oder eine Angabe zu der von dem Kraftfahrzeug sensierten Beschaffenheit der Fahrbahn handeln. Bei der Information kann es sich auch um ein Warnsignal oder ein Notfallsignal handeln, beispielsweise um nachfolgende Verkehrsteilnehmer auf eine aktuelle Gefahrensituation hinzuweisen.

Die Vorrichtung 100 hat zumindest einen Prozessor 110 zur Ausführung von Programminstruktionen 112 sowie eine Schnittstelle zur Kommunikation nach außen, wie z.B. eine Netzwerk-Schnittstelle 114 zur Kommunikation über ein Netzwerk 116. Bei dem Netzwerk kann es sich um ein Computer-Netzwerk, wie zum Beispiel das Internet, ein Bussystem, insbesondere ein Feldbussystem, für Einsätze im Bereich der Automatisierungssysteme, insbesondere ein Mobilfunknetzwerk handeln. Alternativ oder zusätzlich zu der Netzwerk-Schnittstelle 114 kann die Vorrichtung 100 auch eine RFID- oder eine NFC-Schnittstelle aufweisen, oder eine WLAN-, Bluetooth oder auch wireless USB-Schnittstelle.

Die Vorrichtung 100 hat ferner eine interne Schnittstelle zur Kommunikation mit einem Sicherheitsmodul 106, das eine entsprechende Schnittstelle 108 aufweist.

Die Schnittstellen 104 und 108 können fest verdrahtet sein, insbesondere dann, wenn das Sicherheitsmodul einen integralen Bestandteil der Vorrichtung 100 bildet. Dies ist insbesondere dann vorteilhaft, wenn das Sicherheitsmodul 106 als ein in die Vorrichtung 100 integrierter elektronischer Schaltkreis, insbesondere als Halbleiterchip, ausgebildet ist, der nicht zerstörungsfrei aus der Vorrichtung 100 entfernbar ist.

Die Schnittstellen 104 und 108 können auch so ausgebildet sein, dass das Sicherheitsmodul 106 aus der Vorrichtung 100 zerstörungsfrei entfernbar und durch ein anderes Sicherheitsmodul 106 austauschbar ist. Beispielsweise ist das Sicherheitsmodul 106 dann als Chipkarte oder als Wert- oder Sicherheitsdokument, insbesondere als Ausweisdokument, wie z.B. als elektronischer Personalausweis, ausgebildet. Durch die Schnittstelle 104 wird dann beispielsweise ein Chipkarten-Lesegerät gebildet, welches in die Vorrichtung 100 integriert ist. Insbesondere kann es sich bei dem Sicherheitsmodul 106 um einen sogenannten ID-Token handeln.

Das Sicherheitsmodul 106 hat einen elektronischen Speicher 118 mit geschützten Speicherbereichen 120, 122 oder 124. Der geschützte Speicherbereich 120 dient zur Speicherung eines Referenzwertes, der für die Authentifizierung des Nutzers 102 gegenüber dem Sicherheitsmodul 106 benötigt wird. Bei diesem Referenzwert handelt es sich beispielsweise um eine Kennung, insbesondere eine sogenannte Personal Identification Number (PIN) oder um Referenzdaten für ein biometrisches Merkmal eines Nutzers 102, welches für die Authentifizierung des Nutzers gegenüber dem Sicherheitsmodul 106 verwendet werden kann. Eine solche Ausführungsform mit einem gespeicherten Referenzwert für die Authentifizierung des Nutzers 102 ist insbesondere dann vorteilhaft, wenn das Sicherheitsmodul 106 dem Nutzer 102 und nicht der Vorrichtung 100 bzw. dem Kraftfahrzeug, zu dem die Vorrichtung 100 gehört, zugeordnet ist. Insbesondere ist diese Ausführungsform dann vorteilhaft, wenn es sich bei dem Sicherheitsmodul 106 um eine Chipkarte oder ein Ausweisdokument, wie zum Beispiel einen elektronischen Personalausweis, handelt.

Wenn das Sicherheitsmodul 106 hingegen einen integralen Bestandteil der Vorrichtung 100 bildet und nicht zerstörungsfrei von der Vorrichtung 100 entfernt werden kann und/oder wenn das Sicherheitsmodul 106 nicht einem Nutzer 102, sondern der Vorrichtung 100 zugeordnet ist, so braucht ein solcher Referenzwert nicht gespeichert zu werden, da dann die Authentifizierung des Nutzers 102 entfallen kann.

Der geschützte Speicherbereich 122 dient zur Speicherung eines privaten Schlüssels und der geschützte Speicherbereich 124 dient zur Speicherung der Information.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastructure (PKI)-Standard erstellt worden sein, beispielsweise nach dem X.509 Standard.

Das Zertifikat muss nicht zwangsläufig in dem elektronischen Speicher 118 des Sicherheitsmoduls 106 gespeichert sein. Alternativ oder zusätzlich kann das Zertifikat auch in einem öffentlichen Verzeichnisserver gespeichert sein.

Das Sicherheitsmodul 106 hat einen Prozessor 128. Der Prozessor 128 dient zur Ausführung von Programminstruktionen 130, 132 und 134. Die Programminstruktionen 130 dienen zur Nutzer-Authentifizierung, d.h. zur Authentifizierung des Nutzers 102 gegenüber dem Sicherheitsmodul 106, falls eine solche Authentifizierung vorgesehen ist.

Bei einer Ausführungsform mit PIN gibt der Nutzer 102 seine PIN zu seiner Authentifizierung in das Sicherheitsmodul 106 ein, beispielsweise über eine Nutzer-Schnittstelle des Kraftfahrzeugs, zu dem die Vorrichtung 100 gehört. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat das Sicherheitsmodul 106 hierzu einen Fingerabdrucksensor oder ein Fingerabdrucksensor ist an die Vorrichtung 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der das Sicherheitsmodul 106 betreffenden Schritte eines kryptografischen Protokolls zur Authentifizierung eines ID-Provider-Computersystems 136 gegenüber dem Sicherheitsmodul 106. Bei dem kryptografischen Protokoll kann es sich um ein Challenge-Response-Protokoll basierend auf einem symmetrischen Schlüssel oder einem asymmetrischen Schlüsselpaar handeln.

Beispielsweise wird durch das kryptografische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptografischen Protokolls authentifiziert sich das ID-Provider-Computersystem 136 gegenüber dem Sicherheitsmodul 106 und weist dadurch seine Leseberechtigung zum Lesen der in dem geschützten Speicherbereich 124 gespeicherten Information nach. Die Authentifizierung kann auch gegenseitig sein, d.h. auch das Sicherheitsmodul 106 muss sich dann gegenüber dem ID-Provider-Computersystem 136 nach demselben oder einem anderen kryptografischen Protokoll authentifizieren.

Die Programminstruktionen 132 dienen zur Ende-zu-Ende-Verschlüsselung von der zwischen dem Sicherheitsmodul 106 und dem ID-Provider-Computersystem 136 übertragenen Information. Für die Ende-zu-Ende-Verschlüsselung kann ein symmetrischer Schlüssel verwendet werden, der beispielsweise anlässlich der Ausführung des kryptografischen Protokolls zwischen dem Sicherheitsmodul 106 und dem ID-Provider-Computersystem 136 vereinbart wird.

Das ID-Provider-Computersystem 136 hat eine Schnittstelle zur Kommunikation mit der Vorrichtung 100, wie zum Beispiel eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509, handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des Sicherheitsmoduls 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem Sicherheitsmodul 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 den Vertrauensanker für die Authentizität der aus dem Sicherheitsmodul 106 ausgelesenen Attribute bildet.

Eine zweite Vorrichtung 150 kann zum Empfang der Information und deren Verarbeitung oder Weiterleitung ausgebildet sein. Die Vorrichtung 150 kann für einen stationären Betrieb ausgebildet sein. Beispielsweise kann es sich bei der Vorrichtung 150 um ein Verkehrsleitsystem handeln, welches die von der Vorrichtung 100 empfangene Information und die von prinzipiell gleich aufgebauten ersten Vorrichtungen (in der Fig. nicht gezeigt) anderer Verkehrsteilnehmer empfangenen Informationen verarbeitet. Die Vorrichtung 150 kann auch für einen mobilen Betrieb ausgebildet sein. Beispielsweise kann die Vorrichtung 150 prinzipiell gleich aufgebaut sein wie die Vorrichtung 100 und ebenfalls an einem Kraftfahrzeug angeordnet sein. In diesem Fall sind die Vorrichtungen 100 und 150 für eine car-to-car Kommunikation ausgebildet.

Die Vorrichtung 150 hat eine Schnittstelle zur Kommunikation mit der Vorrichtung 100 und dem ID-Provider-Computersystem 136, wie zum Beispiel eine Netzwerk-Schnittstelle 152 zur Verbindung mit dem Netzwerk 116. Ferner hat die Vorrichtung 150 zumindest einen Prozessor 154 zur Ausführung von Programminstruktionen 156. Durch Ausführung der Programminstruktionen 156 wird die von der Vorrichtung 100 empfangene Information verarbeitet und/oder weitergeleitet. Durch Ausführung der Programminstruktionen 156 kann mit Hilfe der Information ein Steuerungs- und/oder Regelungssignal generiert werden. Dieses Steuerungs- und/oder Regelungssignal kann automatisch in die Kraftfahrzeugelektronik eingegeben werden, um eine Aktion zu veranlassen, wie zum Beispiel eine Abbremsung des Kraftfahrzeugs. Durch Ausführung der Programminstruktionen 156 kann mit Hilfe der Information auch ein Signal generiert werden, das über eine Nutzer-Schnittstelle zum Beispiel für den Fahrer des Kraftfahrzeugs, in dem die Vorrichtung 150 eingebaut ist, abgegeben werden kann.

Für die Übertragung der Information von der Vorrichtung 100 zu der Vorrichtung 150 kann beispielsweise wie folgt vorgegangen werden:
1. Authentifizierung des Nutzers 102 gegenüber dem Sicherheitsmodul 106.
   Der Nutzer 102 authentifiziert sich gegenüber dem Sicherheitsmodul 106. Bei einer Implementierung mit PIN gibt der Nutzer 102 hierzu seine PIN beispielsweise über die Vorrichtung 100 oder einen daran angeschlossenen Chipkarten-Terminal ein. Durch Ausführung der Programminstruktionen 130 prüft dann der Sicherheitsmodul 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
   Die Authentifizierung des Nutzers 102 gegenüber dem Sicherheitsmodul 106 kann je nach Ausführungsform entfallen.
2. Authentifizierung des ID-Provider-Computersystems 136 gegenüber dem Sicherheitsmodul 106.
   Hierzu wird eine Verbindung 180 zwischen dem Sicherheitsmodul 106 und dem ID-Provider-Computersystem 136 über das Vorrichtung 100 und das Netzwerk 116 hergestellt. Beispielsweise überträgt das ID-Provider-Computersystem 136 sein Zertifikat 144 über diese Verbindung an den Sicherheitsmodul 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem Sicherheitsmodul 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung an den Sicherheitsmodul 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem Sicherheitsmodul 106 authentifiziert. Die Zufallszahl kann als symmetrischer Schlüssel für die Ende-zu-Ende Verschlüsselung verwendet werden.
3. Nachdem sich der Nutzer 102 erfolgreich gegenüber dem Sicherheitsmodul 106 authentifiziert hat, und nachdem sich das ID-Provider-Computersystem 136 erfolgreich gegenüber dem Sicherheitsmodul 106 authentifiziert hat, erhält das ID-Provider-Computersystem 136 eine Leseberechtigung zum Auslesen der in dem geschützten Speicherbereich 124 gespeicherten Information. Aufgrund eines entsprechenden Lesekommandos, welches das ID-Provider-Computersystem 136 über die Verbindung an den Sicherheitsmodul 106 sendet, wird die Information aus dem geschützten Speicherbereich 124 ausgelesen und durch Ausführung der Programminstruktionen 132 verschlüsselt. Die verschlüsselten Attribute werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem Sicherheitsmodul 106 ausgelesenen Information.

Diese Information von dem ID-Provider-Computersystem mit Hilfe seines Zertifikats 144 signiert und über die Vorrichtung 100 oder direkt an die Vorrichtung 150 übertragen.

Je nach Ausführungsform kann die Reihenfolge der Authentifizierung unterschiedlich sein. Beispielsweise kann vorgesehen sein, dass sich zunächst der Nutzer 102 gegenüber dem Sicherheitsmodul 106 authentifizieren muss und nachfolgend das ID-Provider-Computersystem 136. Es ist aber grundsätzlich auch möglich, dass sich zunächst das ID-Provider-Computersystem 136 gegenüber dem Sicherheitsmodul 106 authentifizieren muss und erst nachfolgend der Nutzer 102.

In dem ersten Fall ist der Sicherheitsmodul 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem Sicherheitsmodul 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Der oben genannte Ablauf für die Übertragung der Information wird beispielsweise gestartet, wenn die Vorrichtung 100 die Vorrichtung 150 detektiert. Beispielsweise kann die Vorrichtung 100 hierzu einen Näherungssensor aufweisen, um die Vorrichtung 150 zu detektieren, sobald sich die Vorrichtung 150 in der Nähe der Vorrichtung 100 befindet. Wenn die Vorrichtung 100 für einen stationären Betrieb und die Vorrichtung 150 für einen mobilen Betrieb ausgebildet ist, so kann die Vorrichtung 100 beispielsweise das Vorbeifahren des Kraftfahrzeugs, in dem die Vorrichtung 150 eingebaut ist, detektieren. Wenn die Vorrichtungen 100 und 150 beide in Kraftfahrzeuge eingebaut sind, so kann die Vorrichtung 100 die Vorrichtung 150 detektieren, wenn sich die Vorrichtung 150 innerhalb eines vorgegebenen Abstandes von der Vorrichtung 100 befindet. Die Detektion der Vorrichtung 150 kann auch mit Hilfe der Schnittstellen 114 bzw. 152 erfolgen. Die Anwesenheit der Vorrichtung 150 in der Nähe der Vorrichtung 100 kann der Vorrichtung 100 über das Netzwerk 116 auch von einer weiteren Systemkomponente, wie zum Beispiel einem Verkehrsleitsystem, signalisiert werden.

Die Vorrichtung 100 generiert daraufhin durch Ausführung der Programminstruktionen 112 ein Signal 172, welches über das Netzwerk 116 zu der Vorrichtung 150 übertragen wird. Hierdurch wird der Vorrichtung 150 signalisiert, dass eine Information von der Vorrichtung 100 an die Vorrichtung 150 zu übertragen ist.

Durch Ausführung der Programminstruktionen 156 generiert die Vorrichtung 150 daraufhin eine Anforderung 174, die über das Netzwerk 116 an das ID-Provider-Computersystem 136 übertragen wird. Aufgrund der Anforderung 174 werden dann die oben genannten Schritte zur Authentifizierung, zum Auslesen der Information aus dem Speicherbereich 124 sowie zur Signierung der Information ausgeführt.

Das ID-Provider-Computersystem 136 empfängt also über die mit Ende-zu-Ende-Verschlüsselung geschützte Verbindung eine Nachricht 176 mit der aus dem Speicherbereich 124 ausgelesenen Information. Das ID-Provider-Computersystem 136 sendet die Information und deren Signatur als eine Nachricht 178 über das Netzwerk 116 zu der Vorrichtung 150.

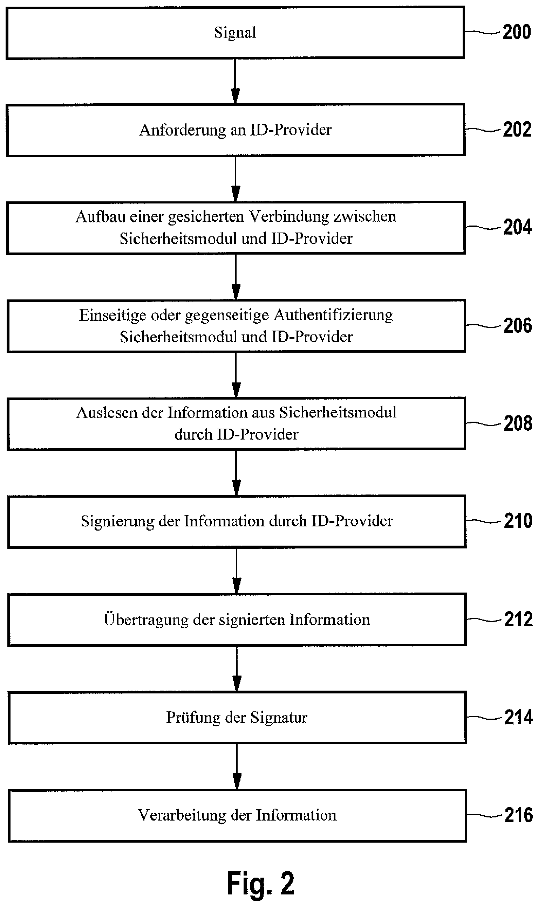

Die Figur 2 zeigt ein entsprechendes Flussdiagramm. In dem Schritt 200 sendet die Vorrichtung 100 das Signal 172 an die Vorrichtung 150. Auf dieses Signal 172 antwortet die Vorrichtung 150 mit der Anforderung 174, die an ID-Provider-Computersystem 136 gesendet wird.

Auf die Anforderung 174 reagiert das ID-Provider-Computersystem 136, indem eine gesicherte Verbindung zwischen dem Sicherheitsmodul 106 und dem ID-Provider-Computersystem 136 aufgebaut wird, beispielsweise nach einem sogenannten Secure Messaging-Verfahren.

In dem Schritt 206 erfolgt zumindest eine einseitige Authentifizierung oder eine gegenseitige Authentifizierung des ID-Provider-Computersystems 136 und des Sicherheitsmoduls 106 über die in dem Schritt 204 aufgebaute Verbindung.

Im Rahmen der Authentifizierung des ID-Provider-Computersystems 136 gegenüber dem Sicherheitsmodul 106 kann das Zertifikat 144 an das Sicherheitsmodul 106 übertragen werden, um die Berechtigung des ID-Provider-Computersystems 136 gegenüber dem Sicherheitsmodul 106 zum Empfang der in dem Speicherbereich 124 gespeicherten Information nachzuweisen.

In dem Schritt 208 wird die Information aus dem Speicherbereich 124 ausgelesen und über die gesicherte Verbindung an das ID-Provider-Computersystem 136 als Nachricht 176 übertragen.

Das ID-Provider-Computersystem 136 signiert diese Information mit Hilfe seines privaten Schlüssels 142 und seines Zertifikats 144 und sendet dann die Nachricht 178 mit der Information und deren Signatur an die Vorrichtung 150 (Schritt 212).

In dem Schritt 214 überprüft die Vorrichtung 150 die Gültigkeit der mit der Nachricht 178 empfangenen Signatur der Information. Wenn die Signatur gültig ist, so erfolgt in dem Schritt 216 eine Verarbeitung und/oder Weiterleitung der Information. Das Ergebnis der Verarbeitung der Information kann ein Steuerungs- und/oder Regelungssignal sein, welches zum Beispiel über einen Kraftfahrzeugbus ausgegeben wird, um eine Aktion, wie zum Beispiel eine automatische Abbremsung des Kraftfahrzeugs oder Ausgabe eines optischen und/oder akustischen Warnsignals an den Nutzer, einzuleiten.

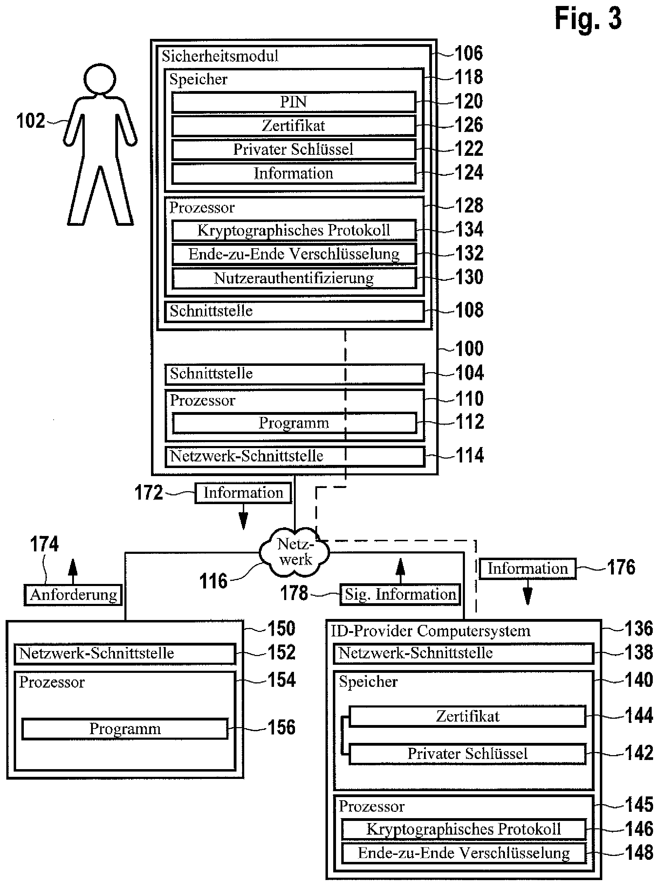

Die Figur 3 zeigt eine alternative Ausführungsform. Im Unterschied zu der Ausführungsform gemäß Figur 1, beinhaltet das Signal 172 bereits die aus dem Speicherbereich 124 ausgelesene Information. Nach dem Empfang des Signals 172 sendet die Vorrichtung 150 die Anforderung 174 an das ID-Provider-Computersystem 136, wie dies auch bei der Ausführungsform gemäß Figur 1 der Fall ist.

Im Unterschied zu der Ausführungsform gemäß Figur 1 beginnt die Vorrichtung 150 unmittelbar nach dem Empfang des Signals 172 bereits mit der Verarbeitung der Information. Während der Verarbeitung der Information liest das ID-Provider-Computersystem 136 die Information aus dem Sicherheitsmodul 106 aus, und zwar nach Authentifizierung und Aufbau der geschützten Verbindung, so wie es auch bei der Ausführungsform gemäß Figur 1 der Fall ist. Wenn die Vorrichtung 150 die Nachricht 178 empfängt, so kann die Vorrichtung 150 prüfen, ob die mit dem Signal 172 und mit der Nachricht 178 empfangenen Informationen übereinstimmend sind. Nur wenn dies der Fall ist, wird die Verarbeitung der Information durch die Vorrichtung 150 fortgesetzt, die Information weitergeleitet oder ein Ergebnis der Verarbeitung der Information, wie zum Beispiel ein Steuerungs- und/oder Regelungssignal, ausgegeben, beispielsweise um eine Aktion zu veranlassen.

Diese Ausführungsform ist zur Verbesserung der Echtzeitfähigkeit des Kommunikationssystems vorteilhaft, da die zum Auslesen der Information aus dem Sicherheitsmodul 106 seitens des ID-Provider-Computersystems 136 sowie zur Signierung und Übertragung dieser Information erforderliche Zeit, durch die Vorrichtung 150 zur Verarbeitung der Information genutzt werden kann, was insgesamt die Reaktionszeit der Vorrichtung 150 auf das Signal 172 reduziert. Insbesondere kann so die Zeitdauer bis zu einem Ansprechen der Bremsen des Kraftfahrzeugs der Vorrichtung 150 reduziert werden, wenn aufgrund der Information ein automatischer Abbremsvorgang eingeleitet wird.

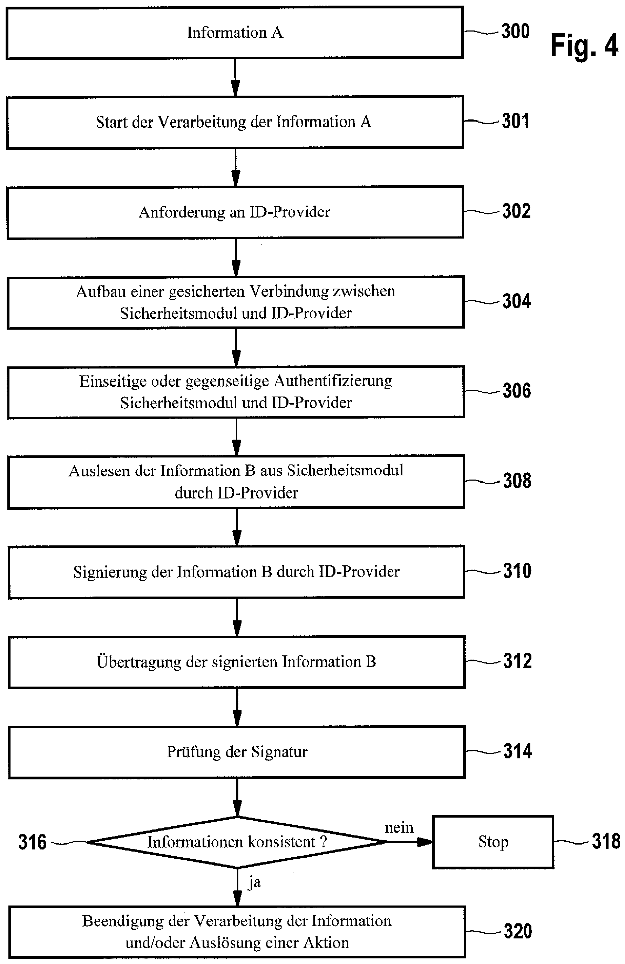

Die Figur 4 zeigt ein entsprechendes Flussdiagramm. In dem Schritt 300 empfängt die Vorrichtung 150 das Signal 172 von der Vorrichtung 100, wobei das Signal 172 eine Information A beinhaltet. In dem Schritt 202 wird durch Ausführung der Programminstruktionen 156 die Verarbeitung der Information A gestartet. Im Wesentlichen gleichzeitig zu dem Schritt 302 wird die Anforderung 174 von der Vorrichtung 150 an das ID-Provider-Computersystem 136 gesendet, um eine Bestätigung dieser Information zu erhalten.

Die nachfolgenden Schritte 304 bis 314 werden analog zu den Schritten 204 bis 216 in der Ausführungsform der Figur 2 durchgeführt, d.h. das ID-Provider-Computersystem 136 liest eine Information B aus dem Sicherheitsmodul 106 über die gesicherte Verbindung aus, signiert diese Information B und überträgt die signierte Information B an die Vorrichtung 150.

Wenn die in dem Schritt 114 ausgeführte Prüfung der Signatur ergibt, dass die Signatur valide ist, so wird in dem Schritt 316 von der Vorrichtung 150 geprüft, ob die Informationen A und B konsistent, d.h. beispielsweise identisch, sind. Ist dies nicht der Fall, so wird der Ablauf in dem Schritt 318 abgebrochen. Insbesondere wird die Verarbeitung der Information A, die in dem Schritt 301 gestartet worden ist, abgebrochen, oder, wenn die Verarbeitung der Information A bereits abgeschlossen ist, ein aufgrund dessen generiertes Steuerungs- und/oder Regelungssignal gelöscht.

Im gegenteiligen Fall wird die Verarbeitung der Information A fortgeführt bis die Verarbeitung beendet ist. Wenn das Ergebnis der Verarbeitung der Information beispielsweise ein Steuerungs- und/oder Regelungssignal ist, so wird dieses von der Vorrichtung 150 ausgegeben, um eine Aktion auszulösen, wie zum Beispiel eine automatische Abbremsung.

### Bezugszeichenliste

- 100: Vorrichtung
- 102: Nutzer
- 104: Schnittstelle
- 106: Sicherheitsmodul
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 148: Programminstruktionen
- 149: Programminstruktionen
- 150: Vorrichtung
- 152: Netzwerk-Schnittstelle
- 154: Prozessor
- 156: Programminstruktionen
- 158: Konfigurationsdatensatz
- 160: Konfigurationsdatensatz
- 161: Konfigurationsdatensatz
- 162: Nutzereingabe
- 164: Dienst-Anforderung
- 166: Attributspezifizierung
- 168: Anforderung
- 170: Antwort
- 172: Signal
- 174: Anforderung
- 176: Nachricht
- 178: Nachricht
- 180: Verbindung

## Patentansprüche

1. Kommunikationsverfahren zur Übertragung einer Information von einer ersten Vorrichtung (100) zu einer zweiten Vorrichtung (150) mit folgenden Schritten:
- Übertragung (172) der Information von der ersten Vorrichtung an die zweite Vorrichtung,
- Beginn der Verarbeitung der Information durch die zweite Vorrichtung,
- Anforderung (174) einer Bestätigung der Information von der zweiten Vorrichtung an ein Computersystem (136),
- gegenseitige Authentifizierung der ersten Vorrichtung und des Computersystems (136),
- Übertragung der Information von der ersten Vorrichtung an das Computersystem unter der Voraussetzung, dass die Authentifizierung erfolgt ist,
- Signierung der Information durch das Computersystem,
- Übertragung der Information und deren Signatur an die zweite Vorrichtung,
wobei die erste Vorrichtung ein Sicherheitsmodul (106) aufweist, in dem die Information gespeichert ist, wobei die gegenseitige Authentifizierung mit Hilfe des Sicherheitsmoduls erfolgt, und wobei eine Verbindung (180) mit Ende-zu-Ende-Verschlüsselung zwischen dem Sicherheitsmodul und dem Computersystem aufgebaut wird, über die die Information an das Computersystem übertragen wird.

2. Kommunikationsverfahren nach Anspruch 1, wobei die gegenseitige Authentifizierung mittels eines Challenge-Response-Verfahrens erfolgt, wobei mit Hilfe des Challenge-Response-Verfahrens ein symmetrischer Schlüssel erzeugt wird, der zum Aufbau der Verbindung mit Ende-zu-Ende-Verschlüsselung verwendet wird.

3. Kommunikationsverfahren nach einem der vorhergehenden Ansprüche, wobei die gegenseitige Authentifizierung und/oder die Signierung der Information mit Hilfe von Zertifikaten einer Public Key Infrastructure erfolgt.

4. Kommunikationsverfahren nach einem der vorhergehenden Ansprüche, wobei die zweite Vorrichtung aufgrund des Empfangs der Information ein Steuerungs- und/oder Regelungssignal und/oder ein zur Ausgabe an einen Nutzer bestimmtes Signal generiert.

5. Kommunikationsverfahren nach einem der vorhergehenden Ansprüche, wobei zumindest eine der ersten und zweiten Vorrichtungen Teil eines Transportmittels, beispielsweise eines Kraftfahrzeugs, ist.

6. Computerprogrammprodukt, insbesondere digitales Speichermedium, mit ausführbaren Programminstruktionen zur Durchführung eines Kommunikationsverfahrens nach einem der Ansprüche 1 bis 5.

7. Kommunikationssystem mit einer ersten Vorrichtung (100), einer zweiten Vorrichtung (150) und einem Computersystem (136),
wobei die zweite Vorrichtung umfasst:
- Mittel (152) zum Empfang einer Information von der ersten Vorrichtung und zum Anfordern einer Bestätigung der Information von dem Computersystem,
- Mittel (154, 156) zum Verarbeiten der Information, wobei mit der Verarbeitung der Information vor Empfang der Bestätigung der Information von dem Computersystem wird,
wobei die erste Vorrichtung umfasst:
- Kommunikationsmittel (114) zur Kommunikation mit dem Computersystem und zum Senden der Information an die zweite Vorrichtung,
- einen Sicherheitsmodul (106) mit Mitteln (134, 122, 126) zur Authentifizierung gegenüber dem Computersystem,
- Speichermittel (124) zur Speicherung der Information,
- Mittel (132) zum Aufbau einer geschützten Verbindung (180) über die Kommunikationsmittel zu dem Computersystem, über die das Computersystem die Information aus den Speichermitteln empfangen kann, unter der Voraussetzung, dass die Authentifizierung erfolgt ist, wobei die Verbindung mittels Ende-zu-Ende-Verschlüsselung geschützt ist,
wobei das Computersystem umfasst:
- Mittel (138) zum Empfang der Anforderung (174) für die Bestätigung der Information von der zweiten Vorrichtung,
- Mittel (146, 144, 142) zur Authentifizierung gegenüber der ersten Vorrichtung (100),
- Mittel (145) zum Lesen der Information aus einem Sicherheitsmodul (106) der ersten Vorrichtung über eine geschützte Verbindung (180), wobei es sich um eine Verbindung mit Ende-zu-Ende-Verschlüsselung zwischen dem Sicherheitsmodul und dem Computersystem handelt, und wobei Voraussetzung für das Lesen der Information die zuvorige Authentifizierung ist,
- Mittel (146, 144, 142) zum Signieren der Information,
- Mittel (138) zum Senden der signierten Information als Bestätigung an die zweite Vorrichtung.

8. Kommunikationssystem nach Anspruch 7, wobei die erste Vorrichtung einen Zertifikat (126) einer PKI für die Authentifizierung der Vorrichtung gegenüber dem Computersystem umfasst.

9. Kommunikationssystem nach Anspruch 7 oder 8, wobei die erste Vorrichtung Mittel (114) umfasst zur Detektion der zweiten Vorrichtung, und Mittel (110, 112) zum Senden eines Signals über die Kommunikationsmittel aufgrund der Detektion der zweiten Vorrichtung.

10. Kommunikationssystem nach einem der Ansprüche 7 bis 9, wobei es sich bei der ersten Vorrichtung um eine Automobilelektronikkomponente, eine Ampel, Stauwarnanlage, Verkehrszählungsanlage oder ein on-board- oder off-board-Navigationssystems handelt, und.
wobei die Kommunikationsmittel vorzugsweise für eine car-to-car Kommunikation ausgebildet sind.

11. Kommunikationssystem nach einem der vorhergehenden Ansprüche 7 bis 10, wobei die Kommunikationsmittel der ersten Vorrichtung für eine drahtlose Kommunikation, insbesondere über ein Mobilfunknetz, mittels eines RFID- oder eines Nahfeld-Kommunikationsverfahrens, ausgebildet sind.

12. Kommunikationssystem nach einem der vorhergehenden Ansprüche 7 bis 11, wobei das Computersystem ein Zertifikat (144) einer Public Key Infrastructure umfasst, wobei die Mittel des Computersystems zum Signieren der Information so ausgebildet sind, dass die Signierung der Information mit Hilfe des Zertifikats erfolgt.

## Claims

1. A communication method for transmitting information from a first device (100) to a second device (150), comprising the following steps:
- the information is transmitted (172) from the first device to the second device,
- the information starts to be processed by the second device,
- the second device sends a request (174) for validation of the information to a computer system (136),
- the first device and the computer system (136) authenticate themselves to one another,
- the information and signature thereof are transmitted to the second device,
wherein the first device comprises a security module (106), in which the information is stored, wherein the mutual authentication is performed with the aid of the security module, and wherein a connection (180) with end-to-end encryption is established between the security module and the computer system, via which connection the information is transmitted to the computer system.

2. The communication method according to claim 1, wherein the mutual authentication is performed by means of a challenge-response protocol, wherein a symmetric key is generated with the aid of the challenge-response method and is used to establish the connection with end-to-end encryption.

3. The communication method according to either one of the preceding claims, wherein the mutual authentication and/or the signing of the information are/is performed with the aid of certificates of a public key infrastructure.

4. The communication method according to any one of the preceding claims, wherein on account of the receipt of the information the second device generates a control signal and/or a signal intended for output to a user.

5. The communication method according to any one of the preceding claims, wherein at least one of the first and second devices is part of a transport means, for example a motor vehicle.

6. A computer program product, in particular digital storage medium, with executable program instructions for carrying out a communication method according to any one of claims 1 to 5.

7. A communication system with a first device (100), a second device (150) and a computer system (136),
wherein the second device comprises:
- means (152) for receiving information from the first device and for requesting a validation of the information from the computer system,
- means (154, 156) for processing the information, wherein the information is processed prior to receiving the validation of the information from the computer system,
wherein the first device comprises:
- communication means (114) for communicating with the computer system and for sending information to the second device,
- a security module (106) with means (134, 122, 126) for authentication to the computer system,
- storage means (124) for storing the information,
- means (132) for establishing a protected connection (180) via the communication means to the computer system, via which the computer system can receive the information from the storage means on the condition that the authentication has been performed, wherein the connection is protected by means of end-to-end encryption,
wherein the computer comprises:
- means (138) for receiving the request (174) for validation of the information from the second device,
- means (146, 144, 142) for authentication to the first device (100),
- means (145) for reading the information from a security module (106) of the first device via a protected connection (180), wherein the connection is a connection with end-to-end encryption between the security module and the computer system, and wherein a condition for reading the information is the prior authentication,
- means (146, 144, 142) for signing the information,
- means (138) for sending the signed information as validation to the second device.

8. The communication system according to claim 7, wherein the first device comprises a certificate (126) of a PKI for the authentication of the device to the computer system.

9. The communication system according to claim 7 or 8, wherein the first device comprises means (114) for detecting the second device, and means (110, 112) for sending a signal via the communication means on account of the detection of the second device.

10. The communication system according to any one of claims 7 to 9, wherein the first device is an electronic component for a car, a traffic light, congestion warning system, toll payment system, or an on-board or off-board navigation system, and
wherein the communication means are designed preferably for car-to-car communication.

11. The communication system according to any one of preceding claims 7 to 10, wherein the communication means of the first device are designed for wireless communication, in particular via a mobile network, or by means of an RFID or a near-field communication method.

12. The communication system according to any one of preceding claims 7 to 11, wherein the computer system comprises a certificate (144) of a public key infrastructure, wherein the means of the computer system are designed to sign the information such that the information is signed with the aid of the certificate.

## Revendications

1. Procédé de communication permettant la transmission d'une information d'un premier dispositif (100) vers un deuxième dispositif (150), avec les étapes suivantes :
- la transmission (172) de l'information du premier dispositif vers le deuxième dispositif,
- le démarrage du traitement de l'information par le deuxième dispositif,
- la demande (174) d'une confirmation de l'information du deuxième dispositif à un système informatique (136),
- l'authentification réciproque du premier dispositif et du système informatique (136),
- la transmission de l'information du premier dispositif au système informatique moyennant la condition que l'authentification a eu lieu,
- la signature de l'information par le système informatique,
- la transmission de l'information et de sa signature au deuxième dispositif,
où le premier dispositif présente un module de sécurité (106) dans lequel l'information est stockée, où l'authentification réciproque a lieu à l'aide du module de sécurité, et où une liaison (180) est établie entre le module de sécurité et le système informatique avec un chiffrement de bout en bout, par laquelle l'information est transmise au système informatique.

2. Procédé de communication selon la revendication 1, dans lequel l'authentification réciproque a lieu au moyen d'un procédé d'interrogation et de réponse, où une clé symétrique, qui est utilisée pour l'établissement de la liaison avec un chiffrement de bout en bout, est générée à l'aide du procédé d'interrogation et de réponse.

3. Procédé de communication selon l'une des revendications précédentes, dans lequel l'authentification réciproque et/ou la signature de l'information a lieu à l'aide de certificats d'une infrastructure à clé publique.

4. Procédé de communication selon l'une des revendications précédentes, dans lequel le deuxième dispositif génère un signal de commande et/ou de régulation, et/ou un signal déterminé pour l'émission à un utilisateur suite à la réception de l'information.

5. Procédé de communication selon l'une des revendications précédentes, dans lequel au moins un parmi les premier et deuxième dispositifs est une partie d'un moyen de transport, par exemple, d'un véhicule.

6. Produit-programme informatique, notamment support de stockage numérique, doté d'instructions de programme exécutables pour la réalisation d'un procédé de communication selon l'une des revendications 1 à 5.

7. Système de communication doté d'un premier dispositif (100), d'un deuxième dispositif (150) et d'un système informatique (136),
dans lequel le deuxième dispositif comprend :
- des moyens (152) pour la réception d'une information provenant du premier dispositif et pour la demande d'une confirmation de l'information provenant du système informatique,
- des moyens (154, 156) pour le traitement de l'information, où le traitement de l'information est fait avant la réception de la confirmation de l'information provenant du système informatique,
dans lequel le premier dispositif comprend :
- des moyens de communication (114) pour la communication avec le système informatique et pour l'envoi de l'information au deuxième dispositif,
- un module de sécurité (106) avec des moyens (134, 122, 126) pour l'authentification vis-à-vis du système informatique,
- des moyens de stockage (124) pour le stockage de l'information,
- des moyens (132) pour l'établissement d'une liaison sécurisée (180) par le biais des moyens de communication vers le système informatique, par lesquels le système informatique peut recevoir l'information à partir des moyens de stockage, moyennant la condition que l'authentification ait eu lieu, où la liaison est protégée au moyen d'un chiffrement de bout en bout,
dans lequel le système informatique comprend :
- des moyens (138) pour la réception de la demande (174) pour la confirmation de l'information du deuxième dispositif,
- des moyens (146, 144, 142) pour l'authentification vis-à-vis du premier dispositif (100),
- des moyens (145) pour la lecture de l'information à partir du module de sécurité (106) du premier dispositif par le biais d'une liaison sécurisée (180), où il s'agit d'une liaison avec un chiffrement de bout en bout entre le module de sécurité et le système informatique, et où l'authentification précédente est une condition nécessaire pour la lecture de l'information,
- des moyens (146, 144, 142) pour la signature de l'information,
- des moyens (138) pour l'envoi de l'information signée en tant que confirmation au deuxième dispositif.

8. Système de communication selon la revendication 7, dans lequel le premier dispositif comprend un certificat (126) d'une infrastructure à clé publique pour l'authentification du dispositif vis-à-vis du système informatique.

9. Système de communication selon la revendication 7 ou la revendication 8, dans lequel le premier dispositif comprend des moyens (114) pour la détection du deuxième dispositif, et des moyens (110, 112) pour l'envoi d'un signal par le biais des moyens de communication suite à la détection du deuxième dispositif.

10. Système de communication selon l'une des revendications 7 à 9, dans lequel il s'agit d'un composant électronique d'automobile, d'une ampoule, d'une installation d'avertissement d'un bouchon, d'une installation de péage ou d'un système de navigation embarqué ou non embarqué dans le cas du premier dispositif, et
dans lequel les moyens de communication sont conçus de préférence pour une communication de véhicule à véhicule.

11. Système de communication selon l'une des revendications précédentes 7 à 10, dans lequel les moyens de communication du premier dispositif sont conçus pour une communication sans fil, notamment par le biais d'un réseau radio mobile, au moyen d'un procédé de communication RFID ou en champ proche.

12. Système de communication selon l'une des revendications précédentes 7 à 11, dans lequel le système informatique comprend un certificat (144) d'une infrastructure à clé publique, où les moyens du système informatique pour la signature de l'information sont conçus de telle manière que la signature de l'information a lieu à l'aide du certificat.
